# EUROPÄISCHE PATENTSCHRIFT

(11) **EP 1 268 674 B1**
(45) Veröffentlichungstag und Bekanntmachung des Hinweises auf die Patenterteilung: **02.06.2004**
(21) Anmeldenummer: 01925375.6
(22) Anmeldetag: 06.03.2001
(51) Int. Cl.: C09B 45/28, C09B 45/24

(54) **SCHWARZE TRIS-AZO-METALL-KOMPLEX-FARBSTOFFE**
BLACK TRIS AZO METAL COMPLEX DYES
COLORANTS NOIRS TRIS-AZO A COMPLEXES METALLIQUES

(30) Priorität: 25.03.2000 DE 10015004
(43) Veröffentlichungstag der Anmeldung: 02.01.2003
(73) Patentinhaber: Clariant GmbH, 65929 Frankfurt am Main (DE)
(72) Erfinder: GEISENBERGER, Josef, 65843 Sulzbach (DE); WUZIK, Andreas, 86836 Untermeitingen (DE)
(74) Vertreter: Hütter, Klaus, Dr.
(86) Internationale Anmeldenummer: PCT/EP2001/002487
(87) Internationale Veröffentlichungsnummer: WO 2001/072906

(56) Entgegenhaltungen:
- GB-A- 2 139 643
- DATABASE WPI Section Ch, Week 199017 Derwent Publications Ltd., London, GB; Class E21, AN 1990-127865 XP002179858 & JP 02 075672 A (MITSUBISHI KASEI CORP), 15. März 1990 (1990-03-15) -& JP 02 075672 A 15. März 1990 (1990-03-15)

## Beschreibung

Die vorliegende Erfindung beschreibt schwarze Tris-Azo-Metall-Komplex-Farbstoffe, Verfahren zu ihrer Herstellung und ihre Verwendung in Aufzeichnungsflüssigkeiten, insbesondere für das Tintenstrahl-Verfahren (Ink-Jet Printing), sowie als Farbmittel für elektrophotographische Toner, Pulverlacke und Farbfilter.
Beim Tintenstrahl-Verfahren handelt es sich um ein berührungsloses DruckVerfahren, wobei man generell zwischen zwei Druck-Techniken unterscheidet: Drop-On-Demand und Continuous Stream. Das Drop-On-Demand Prinzip beruht darauf, dass die Tinte in Form eines Tropfens aus einer Düse zur richtigen Zeit am richtigen Ort platziert wird, wohingegen beim Continuous Stream die Tinte permanent abgegeben und dann entweder auf das Aufnahmemedium, z.B. Papier, trifft, oder in ein Auffangbehältnis abgelenkt wird. Um Drucke hoher Schärfe und guter Auflösung zu erhalten, müssen die Aufzeichnungsflüssigkeiten und die darin enthaltenen Farbstoffe bestimmten Anforderungen genügen, insbesondere im Hinblick auf Lichtechtheit, Wasserechtheit, Reinheit, Partikelfreiheit, Löslichkeit, Lagerstabilität, Viskosität, Oberflächenspannung, Leitfähigkeit, Farbstärke, Farbton und Brillanz (EP-A-0 825 233 und US-A-5 188 664).
Die wichtigste Rolle kommt dabei den in den Tinten eingesetzten Farbstoffen zu. Obwohl eine große Anzahl an Farbstoffen entwickelt wurden, gibt es nur wenige, die die an sie gestellten Anforderungen eines modernen Ink-Jet-Druckprozesses erfüllen:

Anfänglich setzte man traditionelle Farbstoffe aus den Bereichen Lebensmittel, Textil und Papier ein, die dann speziell für die Ink-Jet-Anwendung modifiziert wurden. Beispielhaft erklärt sei dies am Lebensmittel-Farbstoff C.I. Food Black 2 (1), der neben strukturell ähnlichen Verbindungen als schwarzer Farbstoff in Tinten zum Einsatz kam (JP 59-093,766).

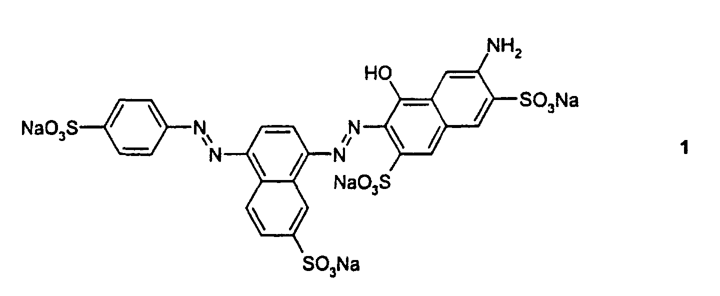

Die davon erhaltenen Drucke erscheinen aber nicht rein schwarz, sondern blauschwarz. Zudem sind die Lichtechtheiten nicht zufriedenstellend. Um diese Nachteile zu minimieren, variierte man die Substituenten von C.I. Food Black 2 und erhielt schwarze Farbstoffe der allgemeinen Formel (2), die einen neutraleren Schwarz-Ton zeigen und eine gesteigerte Wasserechtheit besitzen (US-A-5 053 495).

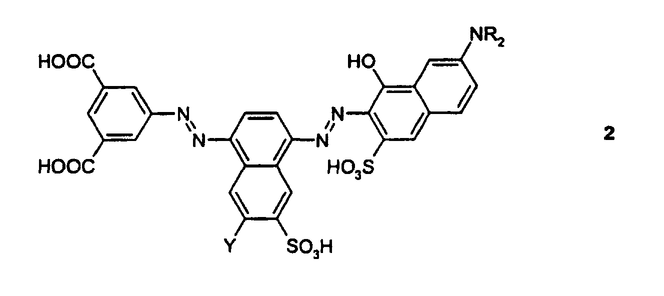

Mit dem Einführen der Carboxylgruppen wurde zwar eine verbesserte Wasserechtheit erzielt, aber gleichzeitig verschlechterte sich die Abriebfestigkeit, was darauf zurückgeführt wurde, dass die Farbstoff-Moleküle aufgrund von Aggregatbildung nicht mehr oder nur sehr wenig in das Aufnahmemedium penetrieren.

Um eine gesteigerte Lichtechtheit zu erreichen, nutzte man Metall-Komplexe von Dis-Azo- und Tetra-Azo-Farbstoffen wie zum Beispiel C.I. Direct Black 62 (3) (DE-A-19831095).

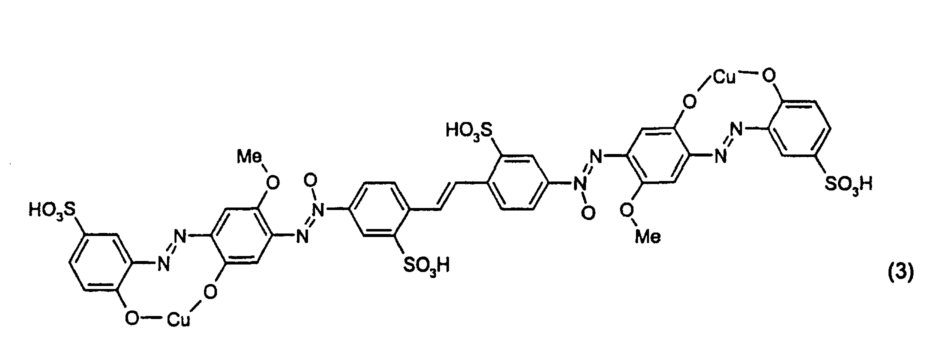

Obwohl die Echtheitseigenschaften verbessert wurden, genügt der Farbstoff (3) nicht allen Anforderungen. Beispielsweise besitzt er neben einer geringen Lagerstabilität eine zu geringe Löslichkeit im Anwendungsmedium.

In JP-A-2 075 672 und GB-A-2 139 643 werden ebenfalls Trisazometallkomplexfarbstoffe beschrieben.

Es besteht somit ein Bedarf an Farbstoffen, welche den bereits bekannten Schwarz-Farbstoffen insbesondere in der Lichtechtheit, der Wasserechtheit, der Löslichkeit und in der Lagerstabilität der Tinten überlegen sind und gleichzeitig die weiteren für den Ink-Jet Bereich erforderlichen Eigenschaften besitzen. Überraschenderweise wurde gefunden, dass die gestellten Anforderungen von nachstehend definierten, wasserlöslichen Farbstoffen erfüllt werden.

Gegenstand der vorliegenden Erfindung sind die Metall-Komplexe von Tris-Azo-Farbstoffen der allgemeinen Formel (4) 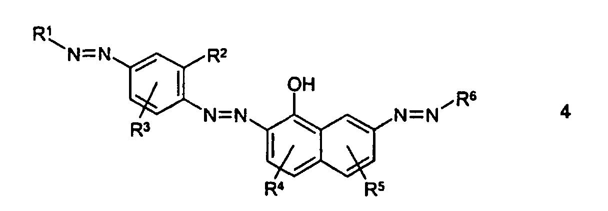 worin
R¹ einen einfach oder mehrfach, z. B. 2-, 3-, 4- oder 5-fach, mit OH, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂ und/oder Halogen substituierten Arylrest darstellt;
R² für OH, O(C₁-C₆)-Alkyl, COOM oder SO₃M;
R³, R⁴ und R⁵ gleich oder verschieden sind und für H, OH, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂, oder Halogen stehen,
R⁶ für einen nicht substituierten oder für einen einfach oder mehrfach, z. B. 2-, 3-, 4- oder 5-fach, mit OH, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, CONH-phenyl, SO₂NH-phenyl, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂, Halogen und/oder Phenylsulfo substituierten ein- oder zweikernigen heterocyclischen Aromaten, einen gleichermaßen substituierten Pyrazol- oder einen gleichermaßen substituierten Pyridon-Rest steht; und
M für Wasserstoff, ein einwertiges Metall-Kation, ein Äquivalent eines mehrwertigen Metall-Kations oder ein gegebenenfalls mit Alkyl, Alkoxyalkyl oder Hydroxyalkyl substituiertes Ammoniumion steht.

Bevorzugt im Sinne der vorliegenden Erfindung sind diejenigen Farbstoffe der Formel (4) die als komplex gebundenes Metallatom Aluminium, Chrom, Eisen, Kobalt, Nickel oder Kupfer enthalten.

In den vorstehenden Definitionen bedeutet "Aryl" bevorzugt Phenyl oder Naphthyl, und "Acyl" bedeutet bevorzugt Formyl, Acetyl oder Propionyl.

In den erfindungsgemäßen Tris-Azo-Metall-Komplex-Farbstoffen ist das Metallatom vorzugsweise wie in Formel (4a) dargestellt gebunden. 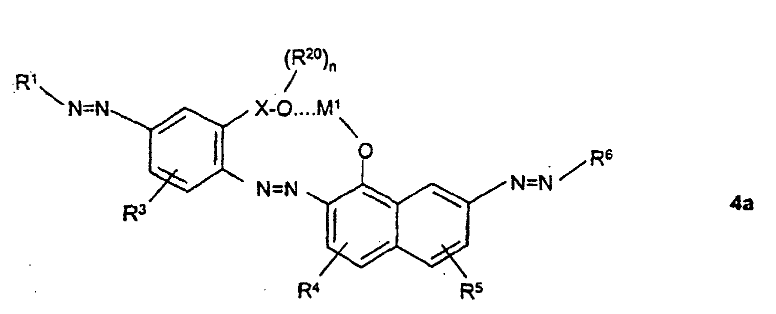 wobei
- M¹: vorzugsweise Al, Cr, Fe, Co, Ni oder Cu, insbesondere Cu,
- R²⁰: C₁-C₆-Alkyl,
- n: die Zahl 0 oder 1, und
- X: eine chemische Bindung, -CO- oder -SO₂- bedeuten.
R¹ ist vorzugsweise ein 1-, 2-, oder 3-fach mit OH, O(C₁-C₆)-Alkyl, COOM, SO₃M und/oder NH₂ substituierter Phenyl- oder Naphthalin-Rest.
R² ist vorzugsweise OH oder COOM.
R³ ist vorzugsweise H, Methyl oder O(C₁-C₆)-Alkyl.
R⁴ und R⁵ sind vorzugsweise H, COOM oder SO₃M.
R⁶ ist vorzugsweise ein 1-, 2- oder 3-fach mit OH, O(C₁-C₆)-Alkyl, COOM, SO₃M,
NH₂, NHAryl, NHAcyl und/oder Phenylsulfo substituierter Pyridyl- oder Pyrazol-Rest.
M ist vorzugsweise H, Na, K, Li, Ca/2 oder Ammonium.

Besonders bevorzugt sind die Kupferkomplexe der Farbstoffe der Formel (4), wobei R¹-R⁶ und M die genannten bevorzugten Bedeutungen besitzen.

Besonders bevorzugte Farbstoffe entsprechen den folgenden Formeln (8), (9), (10), (12).

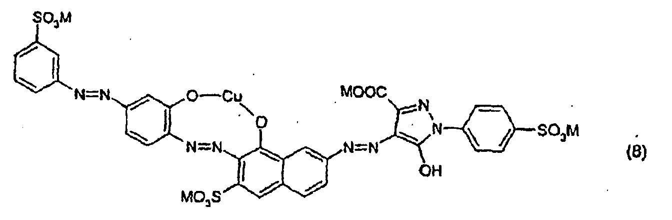

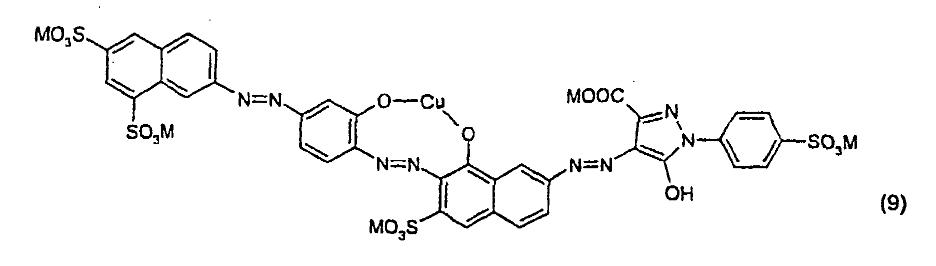

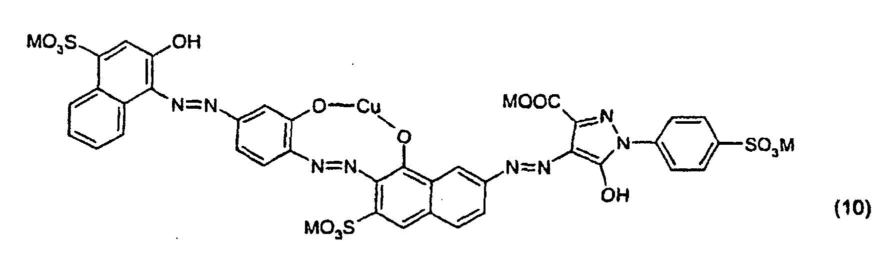

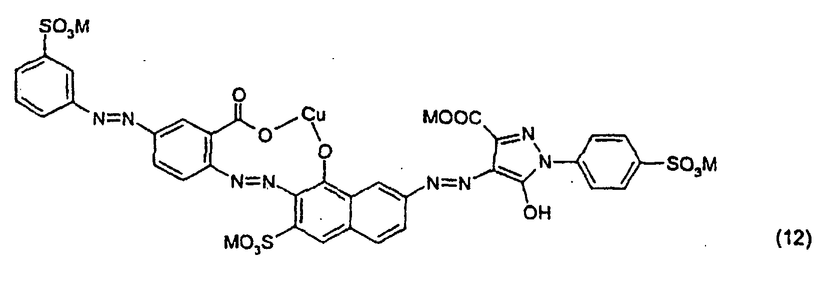

Gegenstand der vorliegenden Erfindung ist auch ein Verfahren zur Herstellung von Metall-Komplexen der Trisazofarbstoffe der Formel (4), dadurch gekennzeichnet, dass man das Naphtholamin der Formel (14) 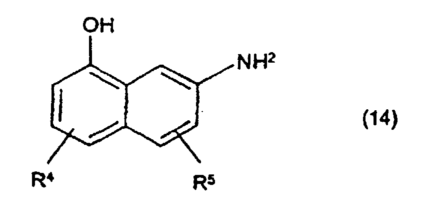 diazotiert und das daraus entstehende Diazoniumsalz mit einer Verbindung der Formel (15) kuppelt

H-R⁶ (15)

und die entstandene Verbindung der Formel (16) 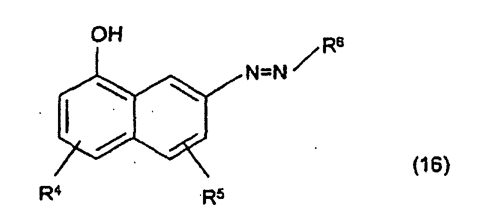 mit dem Diazoniumsalz der Formel (17) kuppelt, 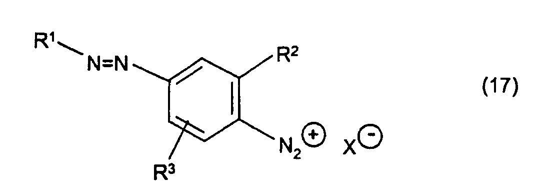 wobei X^{⊖} ein Anion, wie z.B. Chlorid oder Sulfat bedeutet,
und zur Komplexierung mit einer Metallsalz-Lösung umsetzt.

Es ist auch möglich, die Verbindung der Formel (14) zunächst mit dem Diazoniumsalz (17) zu kuppeln, dann zu diazotieren und mit der Verbindung (15) zu kuppeln.
Außerdem ist es unter den gleichen Bedingungen möglich, das Diazoniumsalz (17) auf den Baustein (14) zu kuppeln, dann erneut zu diazotieren und mit der Verbindung (15) zu kuppeln. Abschließend erfolgt entweder nach dem gleichen Verfahren, oder wie nach dem in Beispiel X angegebenen Verfahren die Metallierung mit einer Metallsalz-Lösung.

Die erwähnten Diazotierungs- und Kupplungsschritte können nach üblichen Methoden durchgeführt werden.
Die Diazotierungen werden bevorzugt in wäßriger Lösung oder Suspension mit Natriumnitrit bei Temperaturen von 0 bis 10°C und einem pH-Wert zwischen 1 und 3 durchgeführt.

Die Azokupplungen werden bevorzugt in wäßriger Lösung oder Suspension bei Temperaturen von 0 bis 20°C und einem pH-Wert zwischen 3 und 9 durchgeführt. Die molaren Verhältnisse zwischen dem jeweiligen Diazoniumsalz und der jeweiligen Kupplungskomponente betragen vorzugsweise 1: (0,8 bis 2).

Die Komplexierung mit dem Metall M¹ geschieht zweckmäßigerweise durch Zugabe einer wässrigen Metallsalzlösung, z.B. einem Metallsulfat, -chlorid, - bromid, -hydrogensulfat, -bicarbonat oder -carbonat, zur Trisazoverbindung der Formel (4). Dabei ist es vorteilhaft, den pH auf 2 bis 6 einzustellen und auf eine Temperatur zwischen 60 und 130°C, gegebenenfalls unter Druck, zu erhitzen.

Die erfindungsgemäßen Farbstoffe können auch durch das kontinuierliche Mischen von äquivalenten Mengen der Ausgangsprodukte in Form wäßrig-saurer oder wäßrig-alkalischer Lösungen in Mischdüsen und Durchflußreaktoren, ggf. mit einer Nachreaktionsphase in einem Reaktionskessel, dargestellt werden.

Die erfindungsgemäßen Farbstoffe können aus den zunächst erhaltenen, bevorzugt wäßrigen Reaktionsgemischen durch Aussalzen, Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet werden und die die erfindungsgemäßen Farbstoffe enthaltenden Reaktionsmischungen durch Zusatz von organischen und/oder anorganischen Basen und/oder Feuchthaltemitteln und gegebenenfalls nach teilweiser oder vollständiger Entsalzung mittels Membranfiltration direkt in konzentrierte Farbstofflösungen überführt werden. Alternativ können die Komplex-Farbstoffe auch als Preßkuchen (gegebenenfalls auch in Flush-Verfahren) oder als Pulver eingesetzt werden.

Für konzentrierte Farbstofflösungen geeignete anorganische Basen sind beispielsweise Lithiumhydroxid, Lithiumcarbonat, Natriumhydroxid, Natriumhydrogencarbonat, Kaliumhydroxid, Kaliumcarbonat und Ammoniak. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylamino-propanol, Ethylendiamin, Tetramethylethylendiamin, Tetramethylpropylendiamin, Tetramethylhexylendiamin, Diethylentriamin, Triethylentetramin, Triethylamin, Diisopropyl-ethylamin und Polyethylenimin.

Für konzentrierte Farbstofflösungen geeignete Feuchthaltemittel sind beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Gegenstand der vorliegenden Erfindung ist auch die Verwendung der erfindungsgemäßen Trisazo-Metallkomplex-Farbstoffe zum Färben und Bedrucken von natürlichen und synthetischen Fasermaterialien (z.B. Polyester, Seide, Wolle, Mischgewebe), insbesondere zur Aufzeichnung von Schrift und Bildern auf verschiedenen Aufzeichnungsmedien, sowie zum Färben von Papier oder Zellstoffen in der Masse.

Beispielsweise sind die erfindungsgemäßen Trisazo-Metallkomplex-Farbstoffe geeignet als Farbmittel in elektrophotographischen Tonern und Entwicklern, wie z.B. Einkomponenten- und Zweikomponentenpulvertonern, Magnettonem, Flüssigtonern, Polymerisationstonem sowie anderen Spezialtonem. Typische Tonerbindemittel sind Polymerisations-, Polyadditions- und Polykondensationsharze, wie Styrol- Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.
Des weiteren sind die erfindungsgemäßen Trisazo-Metallkomplex-Farbstoffe geeignet als Farbmittel in Pulver und Pulverlacken, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze carboxyl- und hydroxylgruppenhaltige Polyesterharze, Polyurethane- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Außerdem sind die erfindungsgemäßen Komplex-Farbstoffe geeignet als Farbmittel für Farbfilter, sowohl für die additive wie für die subtraktive Farberzeugung (P. Gregory "Topics in Applied Chemistry: High Technology Applications of Organic Colorants" Plenum Press, New York 1991, Seite 15-25).

In den beschriebenen Anwendungsgebieten können die erfindungsgemäßen Komplex-Farbstoffe auch als Farbstoffmischungen untereinander oder mit anderen Farbstoffen und/oder Pigmenten eingesetzt werden.
Des weiteren können die erfindungsgemäßen Farbstoffe als Tinten-Set in Verbindung mit Gelb-, Magenta- und Cyan-Tönen eingesetzt werden. Bei den Gelb-, Magenta- und Cyan-Tönen handelt es sich sowohl um Farbstoffe, wie z.B. die Farbstoffe C.I. Acid Yellow 17, C.I. Acid Yellow 23, C.I. Direct Yellow 86, C.I.
Direct Yellow 98, C.I. Direct Yellow 132, C.I. Reactive Yellow 37, C.I. Acid Red 52, C.I. Acid Red 289, C.I. Reactive Red 23, C.I. Reactive Red 180, C.I. Acid Blue 9, C.I. Direct Blue 199, als auch um Pigmente, wie C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155, C.I. Pigment Yellow 180, C.I. Pigment Red 57:1, C.I. Pigment Red 122, C.I. Pigment Red 146, C.I. Pigment Red 176, C.I. Pigment Red 184, C.I. Pigment Red 185, C.I., Pigment Red 269, C.I. Pigment Violet 19, C.I. Pigment Blue 15, C.I. Pigment Blue 15:3, C.I. Pigment Blue 15:4.
Bei den Reaktivfarbstoffen können auch mit Nucleophilen abreagierte Farbstoffe in Tinten-Sets eingesetzt werden.

Die erfindungsgemäßen Farbstoffe eignen sich besonders zur Herstellung von Aufzeichnungsflüssigkeiten, insbesondere von Tinten auf wäßriger und nichtwäßriger Basis für das Ink-Jet-Druckverfahren, sowie für solche Tinten, die nach dem Hot-Melt Verfahren arbeiten oder auf Mikroemulsionen basieren, aber auch für sonstige Druck-, Vervielfältigungs-, Markierungs-, Schreib-, Zeichen-, Stempel- oder Registrierverfahren.
Darüberhinaus eignen sich die erfindungsgemäßen Komplex-Farbstoffe zum Einfärben von organischen und anorganischen Materialien.

Gegenstand der vorliegenden Erfindung sind auch Aufzeichnungsflüssigkeiten, die dadurch gekennzeichnet sind, dass sie eine oder mehrere der erfindungsgemäßen Farbstoffe, gegebenenfalls zusammen mit anderen wasserlöslichen Farbstoffen zum Nuancieren, enthalten. Die genaue Zusammensetzung der Aufzeichnungsflüssigkeit muß dem beabsichtigten Verwendungszweck angepaßt werden.

Die fertigen Aufzeichnungsflüssigkeiten enthalten im allgemeinen insgesamt 0,1 bis 50 Gew.-% eines oder mehrerer, z.B. 2, 3 oder 4, der Trisazo-Metallkomplex-Farbstoffe, 0 bis 99 Gew.-% Wasser und 0,5 bis 99,5 Gew.-% organisches Lösungsmittel und/oder Feuchthaltemittel. In einer bevorzugten Ausführungsform enthalten die Aufzeichnungsflüssigkeiten 0,5 bis 15 Gew.% Farbstoff, 35 bis 75 Gew.-% Wasser und 10 bis 50 Gew.-% organisches Lösungsmittel und/oder Feuchthaltemittel, in einer anderen bevorzugten Ausführungsform 0,5 bis 15 Gew.-% Farbstoff, 0 bis 20 Gew.-% Wasser und 70 bis 99,5 Gew.-% organisches Lösungsmittel und/oder Feuchthaltemittel. Die fertigen Aufzeichnungsflüssigkeiten können noch weitere, nachstehend erwähnte Zusätze enthalten.
Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösungsmitteln und/oder Feuchthaltemitteln kann es sich um ein organisches Lösungsmittel oder um ein Gemisch derartiger Lösungsmittel handeln, wobei mit Wasser mischbare Lösungsmittel bevorzugt sind. Geeignete Lösungsmittel sind beispielsweise einoder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; ferner Harnstoff, Tetramethylharnstoff, Thiodiglykol, ε-Caprolactam.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Lichtechtheit, Wasserechtheit, Abriebfestigkeit und Auflösung.

### Beispiel 1:

0.05 Mol 1-Hydroxy-7-amino-3-naphthoesäure (14) werden in 18 ml Salzsäure (10N) eingetragen und bei Raumtemperatur 18 Stunden gerührt. Dann gibt man ca. 15 g Eis in das Reaktionsgefäß und tropft innerhalb von 1-2 Stunden 3,6 g Natriumnitrit (gelöst in 10 ml salzfreiem Wasser) zu und rührt bei 5-8°C 4 Stunden nach. Der Überschuß an Nitrit wird mit Amidosulfonsäure entfernt. Die diazotierte Naphthoesäure wird anschließend zu einer mit Natronlauge auf pH 4-6 gestellte und mit 25 g Eis gekühlten Lösung von 3-Carboxy-5-hydroxy-1-(4-sulfophenyl)-4-pyrazol (19) (0,05 Mol in 60 ml entsalztem Wasser) innerhalb von 10 min zugegeben. Man fügt 5 g Natriumacetat zu, stellt den pH-Wert mit 10 g Natriumbicarbonat auf 3-5 und rührt 6 Stunden bei 15-20°C nach, wobei die Verbindung der Formel (20) entsteht.

In einem separaten Gefäß werden 0,05 Mol 2-[(4-Amino-3-methoxyphenyl)azo]-naphthalin-6,8-disulfonsäure (21) mit 10 ml Salzsäure (10N) versetzt und zu dieser Lösung 3,4 g Natriumnitrit (in 10 ml Wasser) innerhalb von 45 min zugetropft. Der Überschuß an Natriumnitrit wird mit Amidosulfonsäure vernichtet. Die so erhaltene Suspension tropft man zur Verbindung der Formel (20) und stellt mit Soda auf pH 5-6. Zur abschließenden Kupferung der entstandenen Trisazoverbindung der Formel (22) wird der pH auf 3-5 gestellt, 7,8 g Kupfersulfat und 5,7 g Natriumacetat zur Reaktionsmischung gegeben. Der Ansatz wird in einen Autoklaven überführt und 12-20 Stunden bei 100-120°C, 3 bar gerührt. Nach beendeter Umsetzung gibt man 6 g Thiosulfat zu und rührt 4-6 Stunden bei 80-100°C. Die Farbstofflösung wird anschließend durch Membranfiltration entsalzt und getrocknet.
Ausbeute: 52 g schwarzes Pulver
UV-VIS (2,238mg/100ml): λₘₐₓ¹ = 412 nm λₘₐₓ² = 582 nm
IR (KBr): 3433 (COOH), 1637 (C=C), 1459, 1191 (SO₃⁻) cm⁻¹.

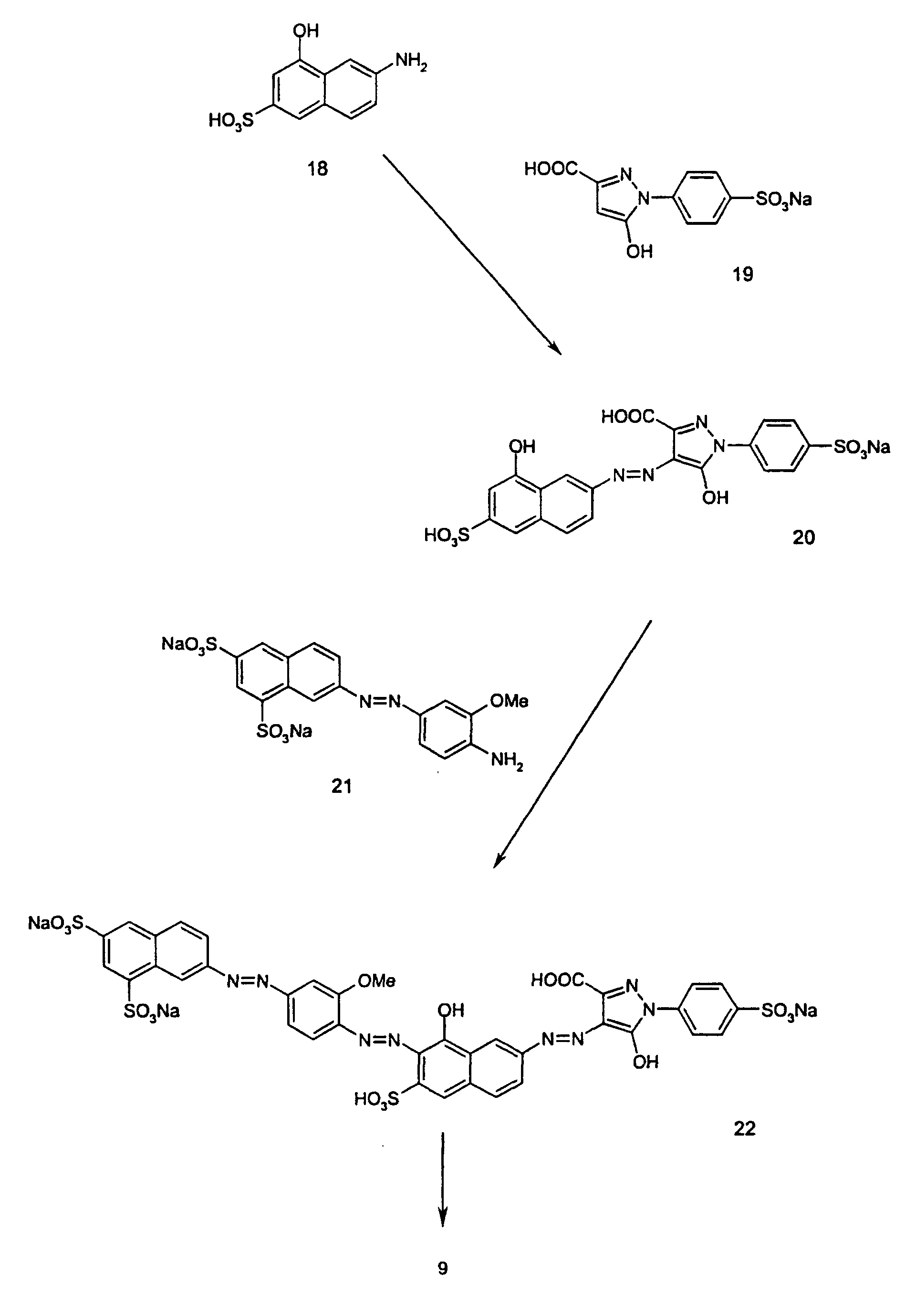

### Beispiel 2:

Der nach dem Beispiel 1 dargestellte Farbstoff (9) wird nach der Entsalzung mit 0,2 Gew.-% eines Konservierungsmittels, wie z.B. Mergal K 10 N, versetzt. Man erhält so eine lagerstabile Farbstofflösung (10 gew.-%ig), die sich hervorragend zur Herstellung von Aufzeichnungsflüssigkeiten für das Ink-Jet-Verfahren eignet.

### Beispiel 3:

Beispiel für die Herstellung einer Aufzeichnungsflüssigkeit von 4 Gew.-% Reinfarbstoffgehalt: 4 g entsalzter Reinfarbstoff gemäß Beispiel 1 werden unter Rühren bei 25°C in ein Gemisch von 20,0 g Diethylenglykol, 2,5 g N-Methylpyrrolidon, 1,0 g Triethanolamin und 76,5 g entsalztes Wasser eingetragen und gelöst.
Die so hergestellte Tinte liefert tiefschwarze Druckbilder mit sehr guter Licht- und Wasserechtheit.

### Beispiel 4:

0,05 Mol 2-[(4-Amino-3-methoxyphenyl)azo]-naphthalin-6,8-disulfonsäure (21) werden mit 10 ml Salzsäure (10N) versetzt und mit Eis auf 0-5°C gekühlt. Zu dieser Lösung tropft man 3,4 g Natriumnitrit (in 10 ml Wasser) innerhalb von 45 min zu. Der Überschuss an Natriumnitrit wird mit Amidosulfonsäure vernichtet. Die so erhaltene Suspension tropft man bei 0-5°C zu einer auf pH 8,5-9,0 eingestellten Lösung von 0.05 Mol 1-Hydroxy-7-amino-3-naphthoesäure (18). Der pH wird während der Kupplung mit Soda bei 8,5-9,0 gehalten. Dann stellt man den pH-Wert mit Salzsäure auf < 1, gibt 15 g Eis in das Reaktionsgefäß und tropft innerhalb von 1-2 Stunden 3,8 g Natriumnitrit (gelöst in 10 ml salzfreiem Wasser) zu und rührt bei 5-10°C 4 Stunden nach. Der Überschuss an Nitrit wird mit Amidosulfonsäure entfernt. Der diazotierte Baustein wird anschließend zu einer mit Natronlauge auf pH 4-6 gestellte und mit 25 g Eis gekühlten Lösung von 3-Carboxy-5-hydroxy-1-(4-sulfophenyl)-4-pyrazol (19) (0,05 Mol in 60 ml entsalztem Wasser) innerhalb von 10 min zugegeben. Man fügt 5 g Natriumacetat zu, stellt den pH-Wert mit 10 g Natriumbicarbonat auf 3-5 und rührt 6 Stunden bei 15-20°C nach, wobei die Verbindung der Formel (22) entsteht. Die Farbstofflösung wird dann mit 12 g Diethanolamin versetzt. Zu dieser Lösung fügt man eine auf 60°C erwärmte Lösung bestehend aus 13 g Kupfersulfat (gelöst in 50 ml Wasser) und 21 ml Ammoniak (25 %). Nach Erhitzen auf 88-90°C hält man diese Temperatur für 4 Stunden und führt abschließend analog wie in Beispiel 1 beschrieben die Thiosulfatzugabe und die Membranfiltration aus.
Ausbeute: 53 g schwarzes Pulver
UV-VIS (2,442mg/100ml): λₘₐₓ¹ = 414 nm λₘₐₓ²= 583 nm
IR (KBr): 3435 (COOH), 1640 (C=C), 1460, 1194 (SO₃⁻) cm⁻¹.

### Beispiel 5:

0,05 Mol 1-[(4-Amino-3-methoxyphenyl)azo]-phenyl-3-sulfonsäure werden mit 10 ml Salzsäure (10N) versetzt und mit Eis auf 0-5°C gekühlt. Zu dieser Lösung tropft man 3,4 g Natriumnitrit (in 10 ml Wasser) innerhalb von 45 min zu. Der Überschuss an Natriumnitrit wird mit Amidosulfonsäure vernichtet. Die so erhaltene Suspension tropft man bei 0-5°C zu einer auf pH 8,5-9,0 eingestellten Lösung von 0,05 Mol 1-Hydroxy-7-amino-3-naphthoesäure. Der pH wird während der Kupplung mit Soda bei 8,5-9,0 gehalten. Dann stellt man den pH-Wert mit Salzsäure auf < 1, gibt 15 g Eis in das Reaktionsgefäß und tropft innerhalb von 1-2 Stunden 3,8 g Natriumnitrit (gelöst in 10 ml salzfreiem Wasser) zu und rührt bei 5-10°C 4 Stunden nach. Der Überschuss an Nitrit wird mit Amidosulfonsäure entfernt. Der diazotierte Baustein wird anschließend zu einer mit Natronlauge auf pH 4-6 gestellte und mit 25 g Eis gekühlten Lösung von 3-Carboxy-5-hydrooy-1-(4-sulfophenyl)-4-pyrazol (0,05 Mol in 60 ml entsalztem Wasser) innerhalb von 10 min zugegeben. Man fügt 5 g Natriumacetat zu, stellt den pH-Wert mit 10 g Natriumbicarbonat auf 3-5 und rührt 6 Stunden bei 15-20°C nach. Die Farbstofflösung wird dann mit 12 g Diethanolamin versetzt. Zu dieser Lösung fügt man eine auf 60°C erwärmte Lösung bestehend aus 13 g Kupfersulfat (gelöst in 50 ml Wasser) und 21 ml Ammoniak (25 %). Nach Erhitzen auf 88-90°C hält man diese Temperatur für 4 Stunden und führt abschließend analog wie in Beispiel 1 beschrieben die Thiosulfatzugabe und die Membranfiltration aus.
Nach dem Trocknen erhält man den Farbstoff (8) in einer Ausbeute von 50 g als schwarzes Pulver.
UV-VIS (2,266mg/100ml): λₘₐₓ¹ = 438 nm λₘₐₓ² = 588 nm
IR (KBr): 3425 (COOH), 1645 (C=C), 1470, 1185 (SO₃⁻) cm⁻¹.

### Beispiel 6:

0,05 Mol 2-Hydroxy-1-[(4-Amino-3-methoxyphenyl)azo]-naphthalin-4-sulfonsäure werden mit 10 ml Salzsäure (10N) versetzt und mit Eis auf 0-5°C gekühlt. Zu dieser Lösung tropft man 3,4 g Natriumnitrit (in 10 ml Wasser) innerhalb von 45 min zu. Der Überschuss an Natriumnitrit wird mit Amidosulfonsäure vernichtet. Die so erhaltene Suspension tropft man bei 0-5°C zu einer auf pH 8,5-9,0 eingestellten Lösung von 0.05 Mol 1-Hydroxy-7-amino-3-naphthoesäure. Der pH wird während der Kupplung mit Soda bei 8,5-9,0 gehalten. Dann stellt man den pH-Wert mit Salzsäure auf < 1, gibt 15 g Eis in das Reaktionsgefäß und tropft innerhalb von 1-2 Stunden 3,8 g Natriumnitrit (gelöst in 10 ml salzfreiem Wasser) zu und rührt bei 5-10°C 4 Stunden nach. Der Überschuss an Nitrit wird mit Amidosulfonsäure entfernt. Der diazotierte Baustein wird anschließend zu einer mit Natronlauge auf pH 4-6 gestellte und mit 25 g Eis gekühlten Lösung von 3-Carboxy-5-hydroxy-1-(4-sulfophenyl)-4-pyrazol (0,05 Mol in 60 ml entsalztem Wasser) innerhalb von 10 min zugegeben. Man fügt 5 g Natriumacetat zu, stellt den pH-Wert mit 10 g Natriumbicarbonat auf 3-5 und rührt 6 Stunden bei 15-20°C nach. Die Farbstofflösung wird dann mit 12 g Diethanolamin versetzt. Zu dieser Lösung fügt man eine auf 60°C erwärmte Lösung bestehend aus 13 g Kupfersulfat (gelöst in 50 ml Wasser) und 21 ml Ammoniak (25 %). Nach Erhitzen auf 88-90°C hält man diese Temperatur für 4 Stunden und führt abschließend analog wie in Beispiel 1 beschrieben die Thiosulfatzugabe und die Membranfiltration aus.
Nach dem Trocknen erhält man den Farbstoff (10) in einer Ausbeute von 53 g als schwarzes Pulver.
UV-VIS (2,326mg/100ml): λₘₐₓ¹ = 430 nm λₘₐₓ² = 580 nm
IR (KBr): 3440 (COOH), 1645 (C=C), 1470,1175 (SO₃⁻) cm⁻¹.

### Beispiel 7:

0,05 Mol 1-[(4-Amino-3-carboxyphenyl)azo]-phenyl-3-sulfonsäure werden mit 10 ml Salzsäure (10 N) versetzt und mit Eis auf 0-5°C gekühlt. Zu dieser Lösung tropft man 3,4 g Natriumnitrit (in 10 ml Wasser) innerhalb von 45 min zu. Der Überschuss an Natriumnitrit wird mit Amidosulfonsäure vernichtet. Die so erhaltene Suspension tropft man bei 0-5°C zu einer auf pH 8,5-9,0 eingestellten Lösung von 0,05 Mol 1 -Hydroxy-7-amino-3-naphthoesäure. Der pH wird während der Kupplung mit Soda bei 8,5-9,0 gehalten. Dann stellt man den pH-Wert mit Salzsäure auf < 1, gibt 15 g Eis in das Reaktionsgefäß und tropft innerhalb von 1-2 Stunden 3,8 g Natriumnitrit (gelöst in 10 ml salzfreiem Wasser) zu und rührt bei 5-10°C 4 Stunden nach. Der Überschuss an Nitrit wird mit Amidosulfonsäure entfernt. Der diazotierte Baustein wird anschließend zu einer mit Natronlauge auf pH 4-6 gestellte und mit 25 g Eis gekühlten Lösung von 3-Carboxy-5-hydroxy-1-(4-sulfophenyl)-4-pyrazol (0,05 Mol in 60 ml entsalztem Wasser) innerhalb von 10 min zugegeben. Man fügt 5 g Natriumacetat zu, stellt den pH-Wert mit 10 g Natriumbicarbonat auf 3-5 und rührt 6 Stunden bei 15-20°C nach. Die Farbstofflösung wird dann mit 12 g Diethanolamin versetzt. Zu dieser Lösung fügt man eine auf 60°C erwärmte Lösung bestehend aus 13 g Kupfersulfat (gelöst in 50 ml Wasser) und 21 ml Ammoniak (25%). Nach Erhitzen auf 88-90°C hält man diese Temperatur für 4 Stunden und führt abschließend analog wie in Beispiel 1 beschrieben die Thiosulfatzugabe und die Membranfiltration aus.
Nach dem Trocknen erhält man den Farbstoff (12) in einer Ausbeute von 51 g als schwarzes Pulver.
UV-VIS (2,646mg/100ml): λₘₐₓ¹ = 428 nm λₘₐₓ² = 590 nm
IR (KBr): 3430 (COOH), 1650 (C=C), 1465, 1180 (SO₃⁻) cm⁻¹.

## Patentansprüche

1. Metall-Komplex eines Tris-Azo-Farbstoffes der allgemeinen Formel (4) 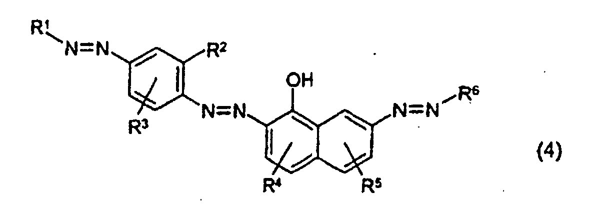 worin
R¹ einen einfach oder mehrfach mit OH, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂ und/oder Halogen substituierten Arylrest darstellt;
R² für OH, O(C₁-C₆)Alkyl, COOM oder SO₃M;
R³, R⁴ und R⁵ gleich oder verschieden sind und für H, OH, O(C₁-C₆)-Alkyl, O(C₁-C₆)-Alkyl-COOM, O(C₁-C₆)-Alkyl-SO₂M, O(Hydroxy(C₁-C₆)-Alkyl), (C₁-C₆)-Alkyl, COOM, SO₃M, SO₂NH₂, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂, oder Halogen stehen,
R⁶ für einen nicht substituierten oder für einen einfach oder mehrfach mit OH, O(C₁-C₆)-Alkyl, O(C₁-C₆)-Alkyl-COOM, O(C₁-C₆)-Alkyl-SO₃M, O(Hydroxy(C₁-C₆)-Alkyl), (C₁-C₆)-Alkyl, COOM, SO₃M, SO₂NH₂, CONH-phenyl, SO₂NH-phenyl, SO₂N(Hydroxy(C₁-C₆)-Alkyl)₂, SO₂NH(C₁-C₆)-Alkyl, SO₂N((C₁-C₆)-Alkyl)₂, NH₂, NH(C₁-C₆)-Alkyl, NHAcyl, NHAryl, N(Hydroxy(C₁-C₆)-Alkyl)₂, N((C₁-C₆)-Alkyl)₂, Halogen und/oder Phenylsulfo substituierten ein- oder zweikemigen heterocyclischen Aromaten, einen gleichermaßen substituierten Pyrazol- oder einen gleichermaßen substituierten Pyridon-Rest steht; und
M für Wasserstoff, ein einwertiges Metall-Kation, ein Äquivalent eines mehrwertigen Metall-Kations oder ein gegebenenfalls mit Alkyl, Alkoxyalkyl oder Hydroxyalkyl substituiertes Ammoniumion steht.

2. Metall-Komplex von Tris-Azo-Farbstoffen nach Anspruch 1, **dadurch gekennzeichnet, dass** R¹ einen 1-, 2- oder 3-fach mit OH, O(C₁-C₆)-Alkyl, COOM, SO₃M und/oder NH₂ substituierten Phenyl- oder Naphthalin-Rest darstellt.

3. Metall-Komplex von Tris-Azo-Farbstoffen nach Anspruch 1 oder 2, **dadurch gekennzeichnet, dass** R² für OH oder COOM steht.

4. Metall-Komplex von Tris-Azo-Farbstoffen nach einem oder mehreren der Ansprüche 1 bis 3, **dadurch gekennzeichnet, dass** R³ für H, Methyl oder O(C₁-C₆)-Alkyl steht.

5. Metall-Komplex von Tris-Azo-Farbstoffen nach einen oder mehreren der Ansprüche 1 bis 4, **dadurch gekennzeichnet, dass** R⁴ für H, COOM oder SO₃M steht.

6. Metall-Komplex von Tris-Azo-Farbstoffen nach einem oder mehreren der Ansprüche 1 bis 5, **dadurch gekennzeichnet, dass** R⁵ für H, COOM oder SO₃M steht.

7. Metall-Komplex von Tris-Azo-Farbstoffen nach einem oder mehreren der Ansprüche 1 bis 6, **dadurch gekennzeichnet, dass** R⁶ einen 1-, 2- oder 3-fach mit OH, O(C₁-C₆)-Alkyl, COOM, SO₃M, NH₂, NHAryl, NHAcyl und/oder Phenylsulfo substituierten Pyridyl- oder Pyrazol-Rest darstellt.

8. Metall-Komplex von Tris-Azo-Farbstoffen nach einem oder mehreren der Ansprüche 1 bis 7, **gekennzeichnet durch** die Verbindung der Formel (4a) 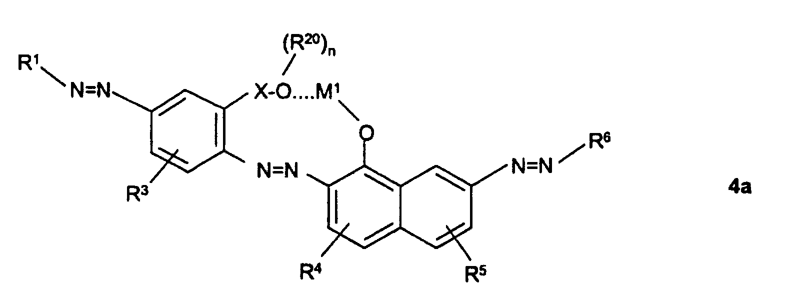 wobei
M¹ Al, Cr, Fe, Co, Ni oder Cu, insbesondere Cu,
R²⁰ C₁-C₆-Alkyl,
n die Zahl 0 oder 1, und
X eine chemische Bindung, -CO- oder -SO₂- bedeuten.

9. Verfahren zur Herstellung von Metallkomplexen der Tris-Azo-Farbstoffe nach einem oder mehreren der Ansprüche 1 bis 8, **dadurch gekennzeichnet, dass** man das Naphtholamin der Formel (14) 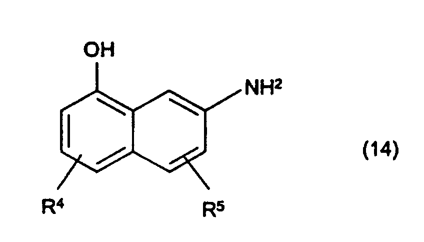 diazotiert und das daraus entstehende Diazoniumsalz mit einer Verbindung der Formel (15) kuppelt
H-R⁶ (15)
und die entstandene Verbindung der Formel (16) 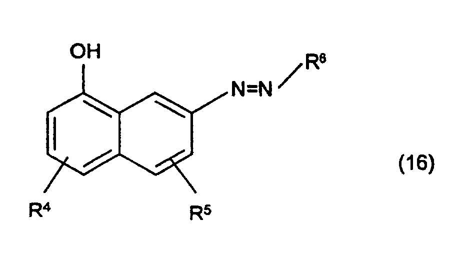 mit dem Diazoniumsalz der Formel (17) kuppelt 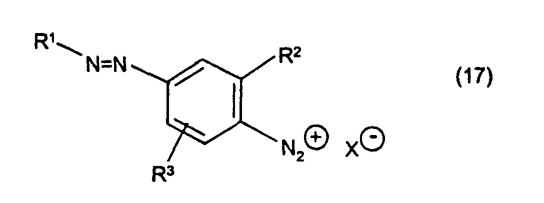 wobei X^{⊖} ein Anion bedeutet,
und zur Komplexierung mit einer Metallsalz-Lösung umsetzt.

10. Verwendung von Metall-Komplexen von Tris-Azo-Farbstoffen gemäß einem oder mehreren der Ansprüche 1 bis 8 zum Färben und Bedrucken von natürlichen oder synthetischen Fasermaterialien, zum Aufzeichnen von Schrift und Bildern auf Aufzeichnungsmedien, zum Färben von Papier oder Zellstoffen in der Masse sowie als Farbmittel für elektrophotographische Toner und für Pulverlacke.

11. Aufzeichnungsflüssigkeit, **gekennzeichnet durch** einen Gehalt an einem oder mehreren der Metall-Komplex-Farbstoffe gemäß einem oder mehreren der Ansprüche 1 bis 8.

12. Aufzeichnungsflüssigkeit nach Anspruch 11, enthaltend 0,1 bis 50 Gew.-% eines oder mehrerer der Metall-Komplex-Farbstoffe, 0 bis 99 Gew.-% Wasser und 0,5 bis 99,5 Gew.-% organische Lösungsmittel, Feuchthaltemittel oder eine Kombination davon.

13. Aufzeichnungsflüssigkeit nach Anspruch 11, enthaltend 0,5 bis 15 Gew.-% eines oder mehrerer Metall-Komplex-Farbstoffe, 35 bis 75 Gew.-% Wasser und 10 bis 50 Gew.-% organisches Lösungsmittel, Feuchthaltemittel oder eine Kombination davon.

14. Aufzeichnungsflüssigkeit nach Anspruch 11, enthaltend 0,5 bis 15 Gew.-% eines oder mehrerer Metall-Komplex-Farbstoffe, 0 bis 20 Gew.-% Wasser und 70 bis 99,5 Gew.-% organisches Lösungsmittel, Feuchthaltemittel oder eine Kombination davon.

## Claims

1. A metal complex of a trisazo dye of the general formula (4) 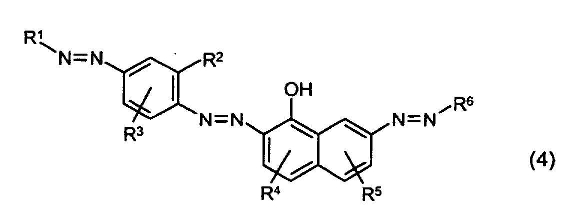 where
R¹ is aryl substituted by one or more substituents selected from the group consisting of OH, O(C₁-C₆)-alkyl, O(C₁-C₆)-alkyl-COOM, O(C₁-C₆)-alkyl-SO₃M, O(hydroxy(C₁-C₆)-alkyl), (C₁-C₆)-alkyl, COOM, SO₃M, SO₂NH₂, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NHacyl, NHaryl, N(hydroxy(C₁-C₆)-alkyl)₂, N((C₁-C₆)-alkyl)₂ and halogen;
R² is OH, O(C₁-C₆)-alkyl, COOM or SO₃M;
R³, R⁴ and R⁵ are identical or different and are each selected from the group consisting of H, OH, O(C₁-C₆)-alkyl, O(C₁-C₆)-alkyl-COOM, O(C₁-C₆)-alkyl-SO₂M, O(hydroxy(C₁-C₆)-alkyl), (C₁-C₆)-alkyl, COOM, SO₃M, SO₂NH₂, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NHacyl, NHaryl, N(hydroxy(C₁-C₆)-alkyl)₂, N((C₁-C₆)-alkyl)₂, and halogen,
R⁶ is a mono- or bicyclic heterocyclic aromatic which is unsubstituted or substituted by one or more substituents selected from the group consisting R⁶ is a mono- or bicyclic heterocyclic aromatic which is unsubstituted or substituted by one or more substituents selected from the group consisting of OH, O(C₁-C₆)-alkyl, O(C₁-C₆)-alkyl-COOM, O(C₁-C₆)-alkyl-SO₃M, O(hydroxy(C₁-C₆)-alkyl), (C₁-C₆)-alkyl, COOM, SO₃M, SO₂NH₂, CONH-phenyl, SO₂NH-phenyl, SO₂N(hydroxy(C₁-C₆)-alkyl)₂, SO₂NH(C₁-C₆)-alkyl, SO₂N((C₁-C₆)-alkyl)₂, NH₂, NH(C₁-C₆)-alkyl, NHacyl, NHaryl, N(hydroxy(C₁-C₆)-alkyl)₂, N((C₁-C₆)-alkyl)₂, halogen and phenylsulfo, or is a similarly substituted pyrazole or pyridone radical; and
M is hydrogen, a monovalent metal cation, one equivalent of a polyvalent metal cation or an unsubstituted or alkyl-, alkoxyalkyl- or hydroxyalkyl-substituted ammonium ion.

2. A metal complex as claimed in claim 1, wherein R¹ is a phenyl or naphthalene radical substituted by 1, 2 or 3 substituents selected from the group consisting of OH, O(C₁-C₆)-alkyl, COOM, SO₃M and NH₂.

3. A metal complex as claimed in claim 1 or 2, wherein R² is OH or COOM.

4. A metal complex as claimed in one or more of claims 1 to 3, wherein R³ is H, methyl or O(C₁-C₆)-alkyl.

5. A metal complex as claimed in one or more of claims 1 to 4, wherein R⁴ is H, COOM or SO₃M.

6. A metal complex as claimed in one or more of claims 1 to 5, wherein R⁵ is H, COOM or SO₃M.

7. A metal complex as claimed in one or more of claims 1 to 6, wherein R⁶ is a pyridyl or pyrazole radical substituted by 1, 2 or 3 substituents selected from the group consisting of OH, O(C₁-C₆)-alkyl, COOM, SO₃M, NH₂, NHaryl, NHacyl and phenylsulfo.

8. A metal complex as claimed in one or more of claims 1 to 7, **characterized by** the compound of the formula (4a) 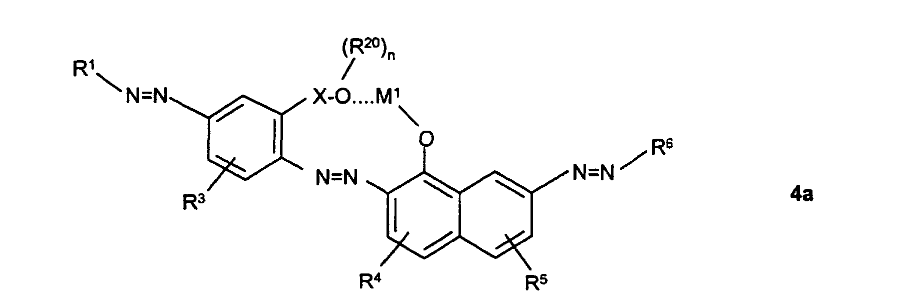 where
M¹ is Al, Cr, Fe, Co, Ni or Cu, especially Cu,
R²⁰ is C₁-C₆-alkyl,
n is 0 or 1, and
X is a chemical bond, -CO- or -SO₂-.

9. A process for preparing a metal complex of a trisazo dye as claimed in one or more of claims 1 to 8, which comprises diazotizing a naphtholamine of the formula (14) 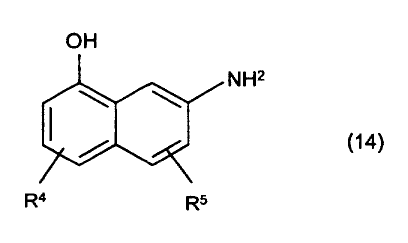 and coupling the resultant diazonium salt with a compound of the formula (15)
H-R⁶ (15)
and coupling the resultant compound of the formula (16) 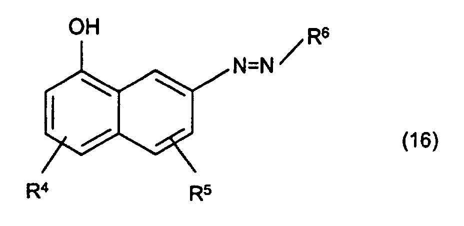 with the diazonium salt of the formula (17) 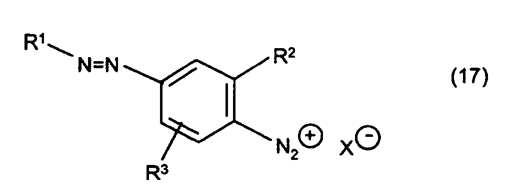 where X^{⊖} is an anion,
and complexing with a metal salt solution.

10. The use of a metal complex of a trisazo dye as claimed in one or more of claims 1 to 8 for dyeing and printing natural or synthetic fiber materials, for recording script and images on recording media, for pulp coloring paper or celluloses and also as colorants for electrophotographic toners and for powder coatings.

11. A recording fluid comprising one or more metal complex dyes as claimed in one or more of claims 1 to 8.

12. A recording fluid as claimed in claim 11, including 0.1 to 50% by weight of one or more of the metal complex dyes, 0 to 99% by weight of water and 0.5 to 99.5% by weight of organic solvents, humectants or a combination thereof.

13. A recording fluid as claimed in claim 11, including 0.5 to 15% by weight of one or more of the metal complex dyes, 35 to 75% by weight of water and 10 to 50% by weight of organic solvents, humectants or a combination thereof.

14. A recording fluid as claimed in claim 11, including 0.5 to 15% by weight of one or more of the metal complex dyes, 0 to 20% by weight of water and 70 to 99.5% by weight of organic solvents, humectants or a combination thereof.

## Revendications

1. Complexe métallique d'un colorant tris-azoïque de formule générale (4) 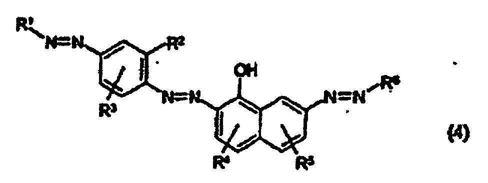 dans laquelle
R¹ représente un groupe alkyle une ou plusieurs fois substitué avec OH, O-alkyle en C₁ à C₆, O-alkyle en C₁ à C₆-COOM, O-alkyle en C₁ à C₆-SO₃M, O(hydroxyalkyle en C₁ à C₆), alkyle en C₁ à C₆, COOM, SO₃M, SO₂NH₂, SO₂N (hydroxyalkyle en C₁ à C₆)₂, SO₂NH-alkyle en C₁ à C₆, SO₂N (alkyle en C₁ à C₆)₂, NH₂, NH-alkyle en C₁ à C₆, NHacyle, NHaryle, N(hydroxyalkyle en C₁ à C₆)₂, N (alkyle en C₁ à C₆)₂ et/ou halogène ;
R² représente OH, O-alkyle en C₁ à C₆, COOM ou SO₃M ;
R³, R⁴ et R⁵ sont identiques ou différents et représentent H, OH, O-alkyle en C₁ à C₆, O-alkyle en C₁ à C₆-COOM, O-alkyle en C₁ à C₆-SO₂M, O(hydroxyalkyle en C₁ à C₆), alkyle en C₁ à C₆, COOM, SO₃M, SO₂NH₂, SO₂N(hydroxyalkyle en C₁ à C₆)₂, SO₂NH-alkyle en C₁ à C₆, SO₂N (alkyle en C₁ à C₆)₂, NH₂, NH-alkyle en C₁ à C₆, NHacyle, NHaryle, N(hydroxyalkyle en C₁ à C₆)₂, N(alkyle en C₁ à C₆)₂ ou halogène,
R⁶ représente un composé aromatique hétérocyclique à un ou deux noyaux non substitué ou une ou plusieurs fois substitué avec OH, O-alkyle en C₁ à C₆, O-alkyle en C₁ à C₆-COOM, O-alkyle en C₁ à C₆-SO₃M, O(hydroxyalkyle en C₁ à C₆), alkyle en C₁ à C₆, COOM, SO₃M, SO₂NH₂, CONHphényle, SO₂NHphényle, SO₂N (hydroxyalkyle en C₁ à C₆)₂, SO₂NH-alkyle en C₁ à C₆, SO₂N (alkyle en C₁ à C₆)₂, NH₂, NH-alkyle en C₁ à C₆, NHacyle, NHaryle, N(hydroxyalkyle en C₁ à C₆)₂, N(alkyle en C₁ à C₆)₂, halogène et/ou phénylsulfo, un groupe pyrazole substitué de manière identique ou un groupe pyridone substitué de manière identique ; et
M représente un hydrogène, un cation métallique monovalent, un équivalent d'un cation métallique polyvalent ou un ion ammonium éventuellement substitué avec un alkyle, alcoxyalkyle ou hydroxyalkyle.

2. Complexe métallique de colorants trisazoïques selon la revendication 1, **caractérisé en ce que** R¹ représente un groupe phényle ou naphtalène substitué 1, 2 ou 3 fois avec OH, O-alkyle en C₁ à C₆, COOM, SO₃M et/ou NH₂.

3. Complexe métallique de colorants trisazoïques selon la revendication 1 ou 2, **caractérisé en ce que** R² représente OH ou COOM.

4. Complexe métallique de colorants trisazoïques selon une ou plusieurs des revendications 1 à 3, **caractérisé en ce que** R³ représente H, un méthyle ou O-alkyle en C₁ à C₆.

5. Complexe métallique de colorants trisazoïques selon une ou plusieurs des revendications 1 à 4, **caractérisé en ce que** R⁴ représente H, COOM ou SO₃M.

6. Complexe métallique de colorants trisazoïques selon une ou plusieurs des revendications 1 à 5, **caractérisé en ce que** R⁵ représente H, COOM ou SO₃M.

7. Complexe métallique de colorants trisazoïques selon une ou plusieurs des revendications 1 à 6, **caractérisé en ce que** R⁶ représente un groupe pyridyle ou pyrazole 1, 2 ou 3 fois substitué avec OH, O-alkyle en C₁ à C₆, COOM, SO₃M, NH₂, NHaryle, NHacyle et/ou phénylsulfo.

8. Complexe métallique de colorants trisazoïques selon une ou plusieurs des revendications 1 à 7, **caractérisé par** le composé de formule (4a) 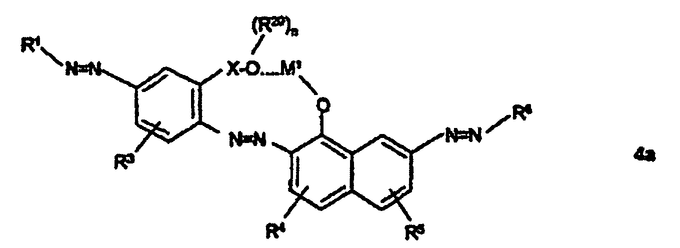 dans laquelle
M¹ représente Al, Cr, Fe, Co, Ni ou Cu, en particulier Cu,
R²⁰ représente un alkyle en C₁ à C₆,
n représente le nombre 0 ou 1, et
X représente une liaison chimique, -CO- ou -SO₂-.

9. Procédé de préparation de complexes métalliques des colorants trisazoïques selon une ou plusieurs des revendications 1 à 8, **caractérisé en ce qu'**on effectue la diazotation de la naphtolamine de formule (14) 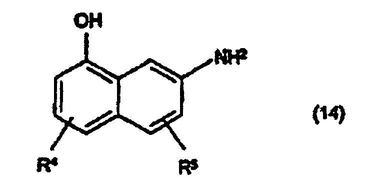 et **en ce qu'**on réalise la copulation du sel de diazonium ainsi produit avec un composé de formule (15)
H-R⁶ (15)
et la copulation du composé produit de formule (16) 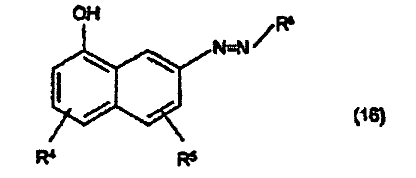 avec le sel de diazonium de formule (17) 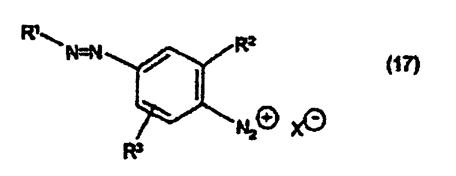 dans laquelle X⁻ représente un anion,
et on met à réagir pour la complexation avec une solution de sel métallique.

10. Utilisation de complexes métalliques de colorants trisazoïques selon une ou plusieurs des revendications 1 à 8 pour la teinture et l'impression de matériaux fibreux naturels ou synthétiques, pour la reproduction de documents et d'images sur des milieux d'enregistrement, pour la teinture dans la masse de papier ou de pâtes de cellulose ainsi que comme colorants pour les toners électrophotographiques et pour les peintures en poudre.

11. Liquide d'enregistrement, **caractérisé par** une teneur en un ou plusieurs des colorants de complexes métalliques selon une ou plusieurs des revendications 1 à 8.

12. Liquide d'enregistrement selon la revendication 11, contenant 0,1 à 50% en poids d'un ou de plusieurs des colorants de type complexe métallique, 0 à 99 % en poids d'eau et 0,5 à 99,5 % en poids de solvants organiques, des agents de rétention d'humidité ou une combinaison de ceux-ci.

13. Liquide d'enregistrement selon la revendication 11, contenant 0,5 à 15% en poids d'un ou de plusieurs des colorants de type complexe métallique, 35 à 75 % en poids d'eau et 10 à 50 % en poids d'un solvant organique, des agents de rétention d'humidité ou une combinaison de ceux-ci.

14. Liquide d'enregistrement selon la revendication 11, contenant 0,5 à 15% en poids d'un ou de plusieurs colorants de type complexe métallique, 0 à 20 % en poids d'eau et 70 à 99,5 % en poids d'un solvant organique, des agents de rétention d'humidité ou une combinaison de ceux-ci.
